(19) Europäisches Patentamt
European Patent Office
Office européen des brevets

(11) **EP 3 488 696 B1**

(12) **EUROPÄISCHE PATENTSCHRIFT**

(45) Veröffentlichungstag und Bekanntmachung des Hinweises auf die Patenterteilung:
**04.01.2023   Patentblatt 2023/01**

(21) Anmeldenummer: **18211227.6**

(22) Anmeldetag: **08.07.2014**

(51) Internationale Patentklassifikation (IPC):
**A01N 37/02** (2006.01)    **A01N 47/36** (2006.01)
**A01N 47/38** (2006.01)    **A01P 13/00** (2006.01)

(52) Gemeinsame Patentklassifikation (CPC):
(C-Sets verfügbar)
**A01N 37/02; A01N 47/36**                    (Forts.)

(54) **HERBIZID-KOMBINATION MIT PELARGONSÄURE UND BESTIMMTEN ALS-INHIBITOREN**

HERBICIDAL COMBINATION WITH PELARGONIC ACID AND SPECIFIC ALS INHIBITORS

COMBINAISON D'HERBICIDE CONTENANT DE L'ACIDE PÉLARGONIQUE ET LEUR UTILISASION AN TANT QU'INHIBITEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2013   EP 13176240**

(43) Veröffentlichungstag der Anmeldung:
**29.05.2019   Patentblatt 2019/22**

(62) Dokumentnummer(n) der früheren Anmeldung(en) nach Art. 76 EPÜ:
**17179957.0 / 3 245 873**
**14735982.2 / 3 019 010**

(73) Patentinhaber: **Bayer CropScience Aktiengesellschaft**
**40789 Monheim am Rhein (DE)**

(72) Erfinder:
• **Die Erfinder haben auf ihr Recht verzichtet, als solche bekannt gemacht zu werden.**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
**EP-A1- 0 494 386     US-B1- 6 503 869**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**A01N 37/02, A01N 37/02, A01N 47/36,
A01N 47/38;
A01N 47/36, A01N 47/36**

**Beschreibung**

Die vorliegende Erfindung liegt auf dem technischen Gebiet der Pflanzenschutzmittel, die gegen unerwünschten Pflanzenwuchs, beispielsweise im Nachauflauf in gesäten und/oder gepflanzten Kulturpflanzen, in Obstanbauanlagen (Plantagenkulturen), auf Nicht-Kulturflächen (z.B. Plätzen von Wohn- und Industrieanlagen, Gleisanlagen) und auf Rasenflächen eingesetzt werden können. Neben der einmaligen Anwendung sind auch Sequenz-Anwendungen möglich.

EP 0 494 386 Albeschreibt die Kombination einer C7-C20-Fettsäure mit einem Herbizid US 6 503 869 beschreibt die Verbesserung herbizider Zusammensetzungen durch die Zugabe vom Ammoniumsalz einer C7-C11-Fettsäure.

Die vorliegende Erfindung betrifft eine Herbizid-Kombination, enthaltend mindestens zwei Herbizide und deren Anwendung zur Bekämpfung unerwünschten Pflanzenwuchses, nämlich eine Herbizid-Kombination enthaltend mindestens Pelargonsäure und mindestens einen ALS-Inhibitor, der Flazasulfuron ist, wie beansprucht.

Herbizid-wirksame Fettsäuren sind aus dem Stand der Technik bekannt (z.B. WO01/05472).

Eine Verbindung aus der Substanzklasse der ALS-Inhibitoren hemmt das Enyzm Acetolactatsynthase (ALS) welches für die Biosynthese von verzweigten Aminosäuren wie L-Valin, L-Leucin und L-Isoleucin verantwortlich ist. Deshalb wird diese Substanzklasse - neben anderen Substanzklassen - entsprechend ihrem Wirkmechanismus der Gruppe der ALS (Acetolactat-Synthase) Inhibitoren zugeordnet (siehe dazu auch http://www.hracglobal.com/Portals/5/moaposter.pdf). Zu den ALS-Inhibitoren gehören beispielsweise die Sulfonylharnstoffe (z.B. siehe auch "The Pesticide Manual" 15th, Edition, British Crop Protection Council 2011). Diese Herbizide werden insbesondere auf Ackerflächen für Soja und Getreide häufig angewandt. Die Aufnahme dieser Herbizide erfolgt über die Wurzeln und Blätter.

Die herbizide Wirksamkeit von solchen Herbiziden gegen Schadpflanzen (Unkräuter, Ungräser, Cyperaceen; im Folgenden auch zusammenfassend als "Unkraut" bezeichnet) liegt bereits auf einem hohen Niveau, hängt jedoch im Allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Weitere Kriterien in diesem Zusammenhang sind die Dauer der Wirkung bzw. die Abbaugeschwindigkeit des Herbizids, die allgemeine Kulturpflanzenverträglichkeit und Wirkungsgeschwindigkeit (schnellere Wirksamkeit), das Wirkungsspektrum und Verhalten gegenüber Folgekulturen (Nachbauprobleme) oder die allgemeine Anwendungsflexibilität (Bekämpfung von Unkräutern in ihren verschiedenen Wachstumsstadien). Zu berücksichtigen sind gegebenenfalls auch Veränderungen in der Empfindlichkeit von Schadpflanzen, die bei längerer Anwendung der Herbizide oder geographisch begrenzt auftreten können (Bekämpfung toleranter oder resistenter Unkrautarten).

Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt.

So besteht oft Bedarf an gezielt synergistischer Aktivität gegenüber speziellen Unkrautarten, einer Unkrautbekämpfung mit insgesamt besserer Selektivität, einem allgemein geringeren Wirkstoffeinsatz für einen gleich guten Bekämpfungserfolg und für einen geringeren Wirkstoffeintrag in die Umwelt, um beispielsweise "Leaching"- und "Carryover"-Effekte zu vermeiden. Ebenso besteht auch Bedarf an der Entwicklung von "One shot"-Applikationen, um arbeitsaufwändige Mehrfachapplikationen zu vermeiden, ebenso wie an der Entwicklung von Systemen zur Steuerung der Wirkungsgeschwindigkeit, wobei neben einer ersten, schnellen Unkrautkontrolle auch eine langsame, residual wirkende Bekämpfung eingestellt wird.

Eine mögliche Lösung für die oben genannten Probleme kann in der Bereitstellung von Herbizid-Kombinationen liegen, also der Mischung mehrerer Herbizide und/oder weiterer Komponenten aus der Gruppe agrochemischer Wirkstoffe anderer Art sowie im Pflanzenschutz üblicher Zusatzstoffe und Formulierungshilfsmitteln, welche die gewünschten zusätzlichen Eigenschaften beisteuern. Allerdings treten bei der kombinierten Anwendung mehrerer Wirkstoffe nicht selten Phänomene der chemischen, physikalischen oder biologischen Unverträglichkeit auf, z.B. mangelnde Stabilität in einer gemeinsamen Formulierung, Zersetzung eines Wirkstoffes bzw. Antagonismus in der biologischen Wirksamkeit der Wirkstoffe. Daher müssen potentiell geeignete Kombinationen gezielt ausgewählt und experimentell auf ihre Eignung hin überprüft werden, wobei negative wie positive Ergebnisse im Vorhinein nicht sicher ausgeschlossen werden können.

Die Aufgabe der vorliegenden Erfindung bestand darin, dem Stand der Technik gegenüber alternative oder verbesserte Pflanzenschutzmittel zur Verfügung zu stellen.

Überraschenderweise wurde nun gefunden, dass diese Aufgabe durch die Kombination von Pelargonsäure und mindestens einem ALS-Inhibitor, derFlazasulfuron ist wie beansprucht, gelöst werden kann, die in besonders günstiger Weise zusammenwirken; z.B. wenn sie zur Bekämpfung von unerwünschtem Pflanzenwuchs in gesäten und/oder gepflanzten Kulturpflanzen, Grün-/Rasenflächen, in Obstanbauanlagen (Plantagenkulturen) oder auf Nicht-Kulturflächen (z.B. Plätzen von Wohn- und Industrieanlagen, Gleisanlagen eingesetzt werden. Überraschenderweise ist die Wirksamkeit der erfindungsgemäßen Kombinationen aus zwei Wirkstoffen beim Einsatz gegen Unkräuter höher als die Wirkungen der einzelnen Komponenten. Es liegt also ein nicht vorhersehbarer, echter synergistischer Effekt vor und nicht nur eine Wirkungsergänzung (additiver Effekt).

Die Pelargonsäure (Nonansäure) ist eine gesättigte Fett- bzw. Carbonsäure, die sich vom Alkan n-Nonan ableitet. Sie ist eine bei Standardbedingungen flüssige Alkansäure die herbizid wirksam ist. Vorzugsweise wird Pelargonsäure erfindungsgemäß unverseift eingesetzt.

ALS-Inhibitoren sind Iodosulfuron-methyl (IUPAC Name: 4-Iodo-2-[(4-methoxy-6-methyl-1,3,5-triazin-2-yl)carbamoylsulfamoyl]benzoate, Natriumsalz), Foramsulfuron (IUPAC Name: 1-(4,6-Dimethoxypyrimidin-2yl)-3-(2-dimethylcarbamoyl-5-formamidophenylsulfonyl)harnstoff, Mesosulfuron-methyl (IUPAC Name: Methyl 2-[(4,6-dimethoxypyrimidin-2-ylcarbamoyl)sulfamoyl]-a-(methanesulfonamido)-p-toluate), Flazasulfuron (IUPAC Name: 1-(4,6-Dimethoxypyrimidin-2-yl)-3-(3-trifluoromethyl-2-pyridylsulfonyl)harnstoff), Amidosulfuron (IUPAC: 3-(4,6-Dimethoxypyrimidin-2-yl)-1-(N-methyl-N-methylsulfonyl-aminosulfonyl)harnstoff), Ethoxysulfuron (IUPAC Name: 2-ethoxyphenyl[(4,6-dimethoxypyrimidin-2-yl)carbamoyl]sulfamate) und Thiencarbazone methyl (IUPAC Name: Methyl 4-[(4,5-dihydro-3-mehoxy-4-methyl-5-oxo-1$H$-1,2,4-triazol-1 yl)carbonylsulfamoyl]-5-methylthiophene-3 -carboxylate).

Die Erfindung umfasst auch Kombinationen von ALS-Inhibitoren und insbesondere von zwei oder mehr Sulfonylharnstoffen, die sich vom Wirkungsspektrum ergänzen, wobei einer Flazasulfuron ist.

Im Folgenden werden für den Begriff "Komponente(n)" auch die Bezeichnungen "Herbizid(e)", "Einzelherbizid(e)", "Verbindung(en)" oder "Wirkstoff(e)" synonym im Kontext verwendet.

Die erfindungsgemäße Herbizid-Kombination kann zusätzliche weitere Komponenten enthalten: z.B. agrochemische Wirkstoffe anderer Art und/oder im Pflanzenschutz übliche Zusatzstoffe und/oder Formulierungshilfsmittel, oder zusammen mit diesen eingesetzt werden. Im Folgenden umfasst die Verwendung des Begriffs "Herbizid-Kombination(en)" bzw. "Kombination(en)" auch die so entstandenen "herbiziden Mittel".

In bevorzugter Ausführungsform enthält die erfindungsgemäße Herbizid-Kombination mindestens Pelargonsäure und mindestens Flazasulfuron in einem wirksamen Gehalt und/oder weist synergistische Wirkungen auf, beides wie beansprucht. Die synergistischen Wirkungen können z.B. bei gemeinsamer Ausbringung beispielsweise als Readyto-Use Formulierung, Co-Formulierung oder als Tankmischung beobachtet werden, sie können jedoch auch bei zeitlich versetzter Anwendung (Splitapplikation, Splitting) festgestellt werden (abgepackt z.B. als Kombipack oder Monodosen). Möglich ist auch die Anwendung der Herbizide oder der Herbizid-Kombination in mehreren Portionen (Sequenzanwendung), z.B. nach Anwendungen im Nachauflauf oder nach frühen Nachauflaufanwendungen, gefolgt von Applikationen im mittleren oder späten Nachauflauf. Bevorzugt ist dabei die gemeinsame Anwendung der erfindungsgemäßen Herbizid-Kombination. Substanzen, die Protonen anziehen (u.a. Fettsäuren) destabilisieren Sulfonylharnstoffe. Dieses bedeutet, dass Sulfonylharnstoffe und Fettsäuren zusammen nicht oder nur sehr schwer als Soloformulierung zu formulieren sind, was gewisse Anforderungen an die Verpackung des Pflanzenschutzmittels stellt. Sollten Fettsäure und Sulfonylharnstoff wie in den Versuchen als Tankmischung ausgebracht werden, ist sicherzustellen, dass die Spritzbrühe relativ rasch nach dem Ansetzen ausgebracht wird.

Die synergistischen Effekte erlauben eine Reduktion der Aufwandmengen der Einzelherbizide, eine höhere und/oder längere Wirkungsstärke bei gleicher Aufwandmenge, die Kontrolle bislang nicht erfasster Arten (Lücken), die Kontrolle von Arten, die Toleranzen oder Resistenzen gegenüber einzelnen oder mehreren Herbiziden aufweisen, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Pelargonsäure kann bei der erfindungsgemäßen Herbizid-Kombination in einem weiten Bereich variieren, beispielsweise soll die Aufwandmenge mindestens 2500 g AS/ha (AS/ha bedeutet dabei im Folgenden "Aktivsubstanz pro Hektar" = bezogen auf 100%igen Wirkstoff) betragen, vorzugsweise jedoch zwischen 2500 und 30000 g AS/ha, noch bevorzugter zwischen 10000 und 30000g AS/ha und am bevorzugtesten zwischen 20000 - 30000 g AS/ha.

Die Aufwandmenge des herbizid-wirksamen oben genannten ALS-Inhibitors kann bei der erfindungsgemäßen Herbizid-Kombination in einem weiten Bereich variieren, beispielsweise zwischen 1 g und 200 g AS/ha, wobei ein relativ breites Spektrum an Schadpflanzen bekämpft wird.

Bei Flazasulfuron liegt die Aufwandmenge vorzugsweise in einem Bereich von 10 g AS/ha.

Bereiche für geeignete Mengenverhältnisse der Pelargonsäure und des herbizid-wirksamen ALS-Inhibitors ergeben sich z.B. aus den genannten Aufwandmengen für die Einzelstoffe. In der erfindungsgemäßen Kombination können die Aufwandmengen in der Regel reduziert werden. Bevorzugte Mischungsverhältnisse der Pelargonsäure (im Folgenden als Komponente "A" oder nur als "A" bezeichnet) und oben genannter herbizid-wirksamer ALS-Inhibitor (im Folgenden als Komponente "B" oder nur als "B" bezeichnet) in der erfindungsgemäße Kombination sind durch folgende Gewichtsverhältnisse charakterisiert:

Das Gewichtsverhältnis (A) : (B) der Komponenten (A) und (B) liegt im Allgemeinen im Bereich von 30000 : 1 bis 12,5:1, im Sinne der Erfindung im Bereich von 200:1 bis 12,5:1, wie in den Ansprüchen beschrieben.

Bevorzugt sind Herbizid-Kombinationen, die neben der erfindungsgemäßen Kombination, auch noch ein oder mehrere weitere agrochemische Wirkstoffe, die ebenfalls die Funktion eines selektiven Herbizides aufweisen, enthalten. Besonders bevorzugt ist die Verwendung der Kombination von Pelargonsäure sowie von mindestens zwei der oben genannten ALS-Inhibitoren gleichzeitig.

Weiterhin kann die erfindungsgemäße Herbizid-Kombination als zusätzliche weitere Komponenten verschiedene agrochemische Wirkstoffe beispielsweise aus der Gruppe der Safener, Fungizide, Insektizide, Akarizide, Nematizide, Schutzstoffen gegen Vogelfraß, Bodenstrukturverbesserungsmitteln, Pflanzennährstoffen (Düngemitteln) und sich strukturell von den erfindungsgemäß eingesetzten herbizid-wirksamen Verbindungen unterscheidenden Herbizide und Pflanzenwachstumsregulatoren oder aus der Gruppe der im Pflanzenschutz üblichen Zusatzstoffe und Formulierungshilfsmittel enthalten.

Die erfindungsgemäßen Wirkstoffkombinationen besitzen sehr gute herbizide Eigenschaften und lassen sich zur Bekämpfung von Unkräutern verwenden. Unter Unkräutern sind hierbei alle Pflanzen zu verstehen, die an Orten wachsen, wo sie unerwünscht sind.

Die erfindungsgemäßen Wirkstoffkombinationen können z.B. bei den folgenden Pflanzen verwendet werden:

- <u>Dikotyle Unkräuter der Gattungen:</u> Cassia, Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Sphenoclea, Taraxacum, Plantago, Epilobium, Rubus, Achillea, Rumex, Lotus, Bellis.

- <u>Monokotyle Unkräuter der Gattungen:</u> Echinochloa, Eriochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Dactyloctenium, Agrostis, Alopecurus, Apera, Aegilops, Phalaris.

- <u>Moose und Algen</u>

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise ein Unkrautbefall sehr früh und nachhaltig beseitigt wird.

Bevorzugt lassen sich die erfindungsgemäßen Wirkstoffkombinationen als Totalherbizide zur Bekämpfung von Unkräutern einsetzen, z.B. insbesondere auf Nicht-Kulturflächen wie Wegen, Plätzen sowie unter Bäumen und Sträuchern, Gleisanlagen usw. Die erfindungsgemäßen Wirkstoffkombinationen zeichnen sich durch eine besonders schnell einsetzende und lange anhaltende Wirkung aus.

Die erfindungsgemäße Herbizid-Kombination kann nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Verwendung gebracht werden, oder als sogenannte Tankmischungen durch gemeinsame Verdünnung der getrennt formulierten oder partiell getrennt formulierten Komponenten mit Wasser hergestellt werden. Ebenfalls möglich ist die zeitlich versetzte Verwendung (Splitapplikation, Splitting) der getrennt formulierten oder partiell getrennt formulierten Einzelkomponenten. Möglich ist auch die Verwendung der Herbizide oder der Herbizid-Kombination in mehreren Portionen (Sequenzanwendung), z.B. im Nachauflauf oder nach frühen Nachauflaufanwendungen, gefolgt von Applikationen im mittleren oder späten Nachauflauf. Bevorzugt ist dabei die gemeinsame Verwendung der Wirkstoffe der jeweiligen Kombination.

Substanzen, die Protonen anziehen (u.a. Fettsäuren) destabilisieren Sulfonylharnstoffe. Dieses bedeutet, dass Sulfonylharnstoffe und Fettsäuren zusammen nicht oder nur sehr schwer als Soloformulierung zu formulieren sind, was gewisse Anforderungen an die Verpackung des Pflanzenschutzmittels stellt. Sollten Fettsäure und Sulfonylharnstoff wie in den Versuchen als Tankmischung ausgebracht werden, ist sicherzustellen, dass die Spritzbrühe relativ rasch nach dem Ansetzen ausgebracht wird. Eine bevorzugte Variante der Erfindung bezieht sich auf Verfahren zu Bekämpfung von Unkräutern, wobei man die Komponente (A) und die Komponente (B) der erfindungsgemäßen Herbizid-Kombination erst kurz vor Ausbringung auf die Unkräuter und/oder deren Lebensraum zusammenmischt. "Kurz vor Ausbringung" bedeutet dabei erfindungsgemäß, dass Komponente (A) und Komponente (B) vorzugsweise weniger als 6 Stunden, bevorzugter weniger als 3 Stunden und noch bevorzugter weniger als 1 Stunde vor Ausbringung auf die Unkräuter und/oder deren Lebensraum zusammengemischt werden.

Ansonsten können die Pelargonsäure und der mindestens eine erfindungsgemäß eingesetzte ALS-Inhibitor

Flazasulfuron gemeinsam oder getrennt in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im Wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillionit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnuß-Schalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent (Gew.-%) Wirkstoff, vorzugsweise zwischen 0,2 und 90 Gew.-%.

Die erfindungsgemäße Herbizid-Kombination kann als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffkombinationen werden im Allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination von zwei oder drei Herbiziden kann wie folgt berechnet werden (vgl. COLBY, S.R.: "Calculating synergistic and antagonistic responses of herbicide combinations", Weeds 15, Seiten 20 - 22, 1967):
Wenn

X =      % Schädigung durch Herbizid (A) bei m g/ha Aufwandmenge,

Y =      % Schädigung durch Herbizid (B) bei n g/ha Aufwandmenge,

Z =      % Schädigung durch Herbizid (C) bei r kg/ha Aufwandmenge,

E1 =     die erwartete Schädigung durch die Herbizide (A) und (B) bei Aufwandmengen von $\underline{m}$ und $\underline{n}$ kg/ha und,

E2 =     die erwartete Schädigung durch die Herbizide (A) und (B) und (C) bei Aufwandmengen von $\underline{m}$ und $\underline{n}$ und $\underline{r}$ kg/ha bedeutet,

dann ist für eine Kombination

$$E1 = X + Y - \frac{X \times Y}{100}$$

und für eine Kombination aus 3 Wirkstoffen:

$$E2 = X + Y + Z - \frac{(X \times Y \cdot X \times Z \cdot Y \times Z)}{100} + \frac{X \times Y \times Z}{10000}$$

Ist die tatsächliche Schädigung größer als berechnet, so ist die Kombination in ihrer Wirkung überadditiv, d.h., sie zeigt einen synergistischen Effekt. In diesem Fall muss die tatsächlich beobachtete Schädigung größer sein als die aus den oben angeführten Formeln errechneten Werte für erwarteten Schädigungen E1 bzw. E2.

Die Erfindung wird durch die folgenden Beispiele anhand nicht-erfindungsgemäßer Herbizid-Kombinationen veranschaulicht.

**Anwendungsbeispiele:**

Es werden folgende Formulierungen der involvierten Wirkstoffe benutzt:

- Pelargonsäure 186,7 EC (emulsifiable concentrate)
  Handelsformulierung Bayer Garten 3 Stunden Bio-Unkrautfrei zugelassen u.a. in Deutschland - Zulassungsinhaber W. Neudorff GmbH KG

- Foramsulfuron 50 WG (water dispersible granule) nicht adjuvantierte Standard-Granulatformulierung

- Iodosulfuron 10WG (water dispersible granule)
  (Handelsformulierung Destiny, zugelassen u.a. in Australien - Bayer CropScience)

- Mesosulfuron 75 WG (water dispersible granule) nicht adjuvantierte Standard-Granulatformulierung

- Thiencarbazone 70 WG (water dispersible granule) nicht adjuvantierte Standard-Granulatformulierung

- Flazasulfuron 25 WG (water dispersible granule)
  (Handelsformulierung Chikara, zugelassen u.a. in Deutschland - Zulassungsinhaber ISK Biosciences)

- Amidosulfuron 75 WG (water dispersible granule)
  (Handelsformulierung Hoestar, zugelassen u.a. in Deutschland - Bayer CropScience)

- Ethoxysulfuron 60 WG (water dispersible granule)
  (Handelsformulierung SunRice, zugelassen u.a. in Italien - Bayer CropScience)

Die für die Versuche benötigten Wirkstoffkonzentrationen werden durch Verdünnen mit Wasser hergestellt. Die getesteten Wirkstoff-Kombinationen werden kurz vor deren biologischer Testung zusammengemischt.

Post-Emergence-Test

Mit der Wirkstoffzubereitung spritzt man Testpflanzen, welche eine Höhe von 5 bis 15 cm haben so, daß die jeweils gewünschten Wirkstoffmengen pro Flächeneinheit ausgebracht werden. Die Konzentration der Spritzbrühe wird so gewählt, dass in 1000 l Wasser/ha die jeweils gewünschten Wirkstoffmengen ausgebracht werden. Nach 48 Tagen wird der Schädigungsgrad der Pflanzen bonitiert in % Schädigung im Vergleich zur Entwicklung der unbehandelten Kontrolle. Bei allen Herbizid-Kombinationen werden bei der Mehrheit der Testpflanzen synergistische Wirkungen beobachtet (siehe Tabellen 1 bis 18).

Tabelle 1:

| Unkraut | Pelargonsäure 10000 g Wirkstoff/ha; Herbizide Wirkung [%] | Foramsulfuron 60 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 0 | 13,3 | 13 | 81,7 |
| *Festuca ovina* | 0 | 58,3 | 58 | 91,7 |

(fortgesetzt)

| Unkraut | Pelargonsäure 10000 g Wirkstoff/ha; Herbizide Wirkung [%] | Foramsulfuron 60 g Wirkstoff/ha; Herbizide Wirkung [%] | Herbizide Wirksamkeit [%] berechnet nach Colby | Getestete Herbizide Wirkung [%] |
|---|---|---|---|---|
| *Plantago major* | 0 | 33,3 | 33 | 53,3 |
| *Taraxacum officinale* | 6,7 | 75 | 77 | 91,7 |
| *Poa annua* | 0 | 73,3 | 73 | 81,7 |
| *Trifolium repens* | 0 | 60 | 60 | 60 |

Tabelle 1: Herbizid-Kombination bestehend aus Pelargonsäure sowie Foramsulfuron

Tabelle 2:

| Unkraut | Pelargonsäure 10000 g Wirkstoff/ha; Herbizide Wirkung [%] | Foramsulfuron 15 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 0 | 0 | 0 | 65 |
| *Festuca ovina* | 0 | 6,7 | 7 | 70 |
| *Plantago major* | 0 | 0 | 0 | 26,7 |
| *Taraxacum officinale* | 6,7 | 45 | 49 | 78,3 |
| *Poa annua* | 0 | 18,3 | 18 | 45 |
| *Trifolium repens* | 0 | 18,3 | 18 | 35 |

Tabelle 2: Herbizid-Kombination bestehend aus Pelargonsäure sowie Foramsulfuron

Tabelle 3:

| Unkraut | Pelargonsäure 30000 g Wirkstoff/ha; Herbizide Wirkung [%] | Foramsulfuron 60 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 20 | 13,3 | 31 | 83,3 |
| *Festuca ovina* | 6,7 | 58,3 | 61 | 98 |
| *Plantago major* | 13,3 | 33,3 | 42 | 60 |
| *Taraxacum officinale* | 20 | 75 | 80 | 98 |
| *Poa annua* | 0 | 73,3 | 73 | 90 |
| *Trifolium repens* | 3,3 | 60 | 61 | 65 |

Tabelle 3: Herbizid-Kombination bestehend aus Pelargonsäure sowie Foramsulfuron

Tabelle 4:

| Unkraut | Pelargonsäure 30000 g Wirkstoff/ha; Herbizide Wirkung [%] | Foramsulfuron 15 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 20 | 0 | 20 | 68,3 |
| Festuca ovina | 6,7 | 6,7 | 13 | 81,7 |
| Plantago major | 13,3 | 0 | 13 | 35 |
| Taraxacum officinale | 20 | 45 | 56 | 89,3 |
| Poa annua | 0 | 18,3 | 18 | 31,7 |
| Trifolium repens | 3,3 | 18,3 | 21 | 33,3 |

Tabelle 4: Herbizid-Kombination bestehend aus Pelargonsäure sowie Foramsulfuron

Tabelle 5:

| Unkraut | Pelargonsäure 10000 g Wirkstoff/ha; Herbizide Wirkung [%] | Iodosulfuron-methyl 10 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 0 | 40 | 40 | 91 |
| Festuca ovina | 0 | 6,7 | 7 | 23,3 |
| Plantago major | 0 | 53,3 | 53 | 83,3 |
| Taraxacum officinale | 6,7 | 85 | 86 | 97 |
| Poa annua | 0 | 0 | 0 | 10 |
| Trifolium repens | 0 | 80 | 80 | 90 |

Tabelle 5: Herbizid-Kombination bestehend aus Pelargonsäure sowie Iodosulfuronmethyl

Tabelle 6:

| Unkraut | Pelargonsäure 10000 g Wirkstoff/ha; Herbizide Wirkung [%] | Iodosulfuron-methyl 1 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 0 | 0 | 0 | 43,3 |
| Festuca ovina | 0 | 0 | 0 | 13,3 |
| Plantago major | 0 | 0 | 0 | 26,7 |
| Taraxacum officinale | 6,7 | 18,3 | 24 | 66,7 |
| Poa annua | 0 | 0 | 0 | 0 |

(fortgesetzt)

| Unkraut | Pelargonsäure 10000 g Wirkstoff/ha; Herbizide Wirkung [%] | Iodosulfuron-methyl 1 g Wirkstoff/ha; Herbizide Wirkung [%] | Herbizide Wirksamkeit [%] berechnet nach Colby | Getestete Herbizide Wirkung [%] |
|---|---|---|---|---|
| *Trifolium repens* | 0 | 18,3 | 18 | 0 |

Tabelle 6: Herbizid-Kombination bestehend aus Pelargonsäure sowie Iodosulfuron-methyl

Tabelle 7:

| Unkraut | Pelargonsäure 30000 g Wirkstoff/ha; Herbizide Wirkung [%] | Iodosulfuron-methyl 10 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 20 | 40 | 52 | 91,3 |
| *Festuca ovina* | 6,7 | 6,7 | 13 | 68,3 |
| *Plantago major* | 13,3 | 53,3 | 60 | 86,7 |
| *Taraxacum officinale* | 20 | 85 | 88 | 98 |
| *Poa annua* | 0 | 0 | 0 | 28,3 |
| *Trifolium repens* | 3,3 | 80 | 81 | 94,3 |

Tabelle 7: Herbizid-Kombination bestehend aus Pelargonsäure sowie Iodosulfuron-methyl

Tabelle 8:

| Unkraut | Pelargonsäure 30000 g Wirkstoff/ha; Herbizide Wirkung [%] | Iodosulfuron-methyl 1 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 20 | 0 | 20 | 58,3 |
| *Festuca ovina* | 6,7 | 0 | 7 | 23,3 |
| *Plantago major* | 13,3 | 0 | 13 | 35 |
| *Taraxacum officinale* | 20 | 18,3 | 35 | 71,7 |
| *Poa annua* | 0 | 0 | 0 | 3,3 |
| *Trifolium repens* | 3,3 | 18,3 | 21 | 36,7 |

Tabelle 8: Herbizid-Kombination bestehend aus Pelargonsäure sowie Iodosulfuron-methyl

Tabelle 9:

| Unkraut | Pelargonsäure 10000 g Wirkstoff/ha; Herbizide Wirkung [%] | Foramsulfuron 60 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 13,3 | 40 | 48 | 98,3 |
| *Festuca ovina* | 0 | 58,3 | 6,7 | 61 | 97 |
| *Plantago major* | 0 | 33.3 | 53,3 | 69 | 78,3 |
| *Taraxacum officinale* | 6.7 | 75 | 85 | 97 | 98 |
| *Poa annua* | 0 | 73,3 | 0 | 73 | 98,3 |
| *Trifolium repens* | 0 | 60 | 80 | 92 | 95 |

Tabelle 9: Herbizid-Kombination bestehend aus Pelargonsäure sowie Foramsulfuron und Iodosulfuron-methyl.

Tabelle 10:

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 0 | 0 | 0 | 66,7 |
| *Festuca ovina* | 0 | 6,7 | 0 | 7 | 68,3 |
| *Plantago major* | 0 | 0 | 0 | 0 | 41,7 |
| *Taraxacum officinale* | 6.7 | 45 | 18,3 | 58 | 85 |
| *Poa annua* | 0 | 18,3 | 0 | 18 | 56,7 |
| *Trifolium repens* | 0 | 18,3 | 18,3 | 33 | 53,3 |

Tabelle 10: Herbizid-Kombination bestehend aus Pelargonsäure sowie Foramsulfuron und Iodosulfuron-methyl.

Tabelle 11:

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 0 | 40 | 40 | 95,7 |
| *Festuca ovina* | 0 | 6,7 | 6,7 | 13 | 85 |
| *Plantago major* | 0 | 0 | 53,3 | 53 | 81,7 |

(fortgesetzt)

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Taraxacum officinale* | 6,7 | 45 | 85 | 92 | 98,7 |
| *Poa annua* | 0 | 18,3 | 0 | 18 | 78,3 |
| *Trifolium repens* | 0 | 18,3 | 80 | 84 | 95,3 |

<u>Tabelle 11</u>: Herbizid-Kombination bestehend aus Pelargonsäure sowie Foramsulfuron und Iodosulfuron-methyl.

Tabelle 12:

| Unkraut | Pelargonsäure 10000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 13,3 | 0 | 13 | 78,3 |
| *Festuca ovina* | 0 | 58,3 | 0 | 58 | 90 |
| *Plantago major* | 0 | 33,3 | 0 | 33 | 56,7 |
| *Taraxacum officinale* | 6,7 | 75 | 18,3 | 81 | 95 |
| *Poa annua* | 0 | 73,3 | 0 | 73 | 92,3 |
| *Trifolium repens* | 0 | 60 | 18,3 | 67 | 68,3 |

<u>Tabelle 12</u>: Herbizid-Kombination bestehend aus Pelargonsäure sowie Foramsulfuron und Iodosulfuron-methyl.

Tabelle 13:

| Unkraut | Pelargonsäure 20000 g Wirkstoff/ha; Herbizide Wirkung [%] | Foramsulfuron 45 g Wirkstoff/ha; Herbizide Wirkung [%] | Iodosulfuron-methyl 1,25 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 10 | 13 | 0 | 22 | 78 |
| *Festuca ovina* | 0 | 53 | 0 | 53 | 98 |
| *Plantago major* | 0 | 23 | 3 | 26 | 50 |
| *Taraxacum officinale* | 7 | 70 | 18 | 77 | 98 |
| *Poa annua* | 0 | 48 | 0 | 48 | 93 |

(fortgesetzt)

| Unkraut | Pelargonsäure 20000 g Wirkstoff/ha; Herbizide Wirkung [%] | Foramsulfuron 45 g Wirkstoff/ha; Herbizide Wirkung [%] | Iodosulfuron-methyl 1,25 g Wirkstoff/ha; Herbizide Wirkung [%] | Herbizide Wirksam keit [%] berechnet nach Colby | Getestete Herbizide Wirkung [%] |
|---|---|---|---|---|---|
| *Trifolium repens* | 0 | 53 | 32 | 68 | 68 |

Tabelle 13: Herbizid-Kombination bestehend aus Pelargonsäure sowie Foramsulfuron und Iodosulfuron-methyl.

Tabelle 14:

| Unkraut | Pelargonsäure 20000 g Wirkstoff/ha; Herbizide Wirkung [%] | Foramsulfuron 60 g Wirkstoff/ha; Herbizide Wirkung [%] | Iodosulfuron-methyl 2,5 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 10 | 13 | 10 | 30 | 89 |
| *Festuca ovina* | 0 | 58 | 0 | 58 | 98 |
| *Plantago major* | 0 | 33 | 30 | 53 | 55 |
| *Taraxacum officinale* | 7 | 75 | 42 | 86 | 97 |
| *Poa annua* | 0 | 73 | 0 | 73 | 93 |
| *Trifolium repens* | 0 | 60 | 45 | 78 | 78 |

Tabelle 14: Herbizid-Kombination bestehend aus Pelargonsäure sowie Foramsulfuron und Iodosulfuron-methyl.

Tabelle 15:

| Unkraut | Pelargonsäure 30000 g Wirkstoff/ha; Herbizide Wirkung [%] | Foramsulfuron 60 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 20 | 13,3 | 40 | 58 | 97,7 |
| *Festuca ovina* | 6,7 | 58,3 | 6,7 | 64 | 97,7 |
| *Plantago major* | 13,3 | 33,3 | 53,3 | 73 | 88,3 |
| *Taraxacum officinale* | 20 | 75 | 85 | 97 | 98 |
| *Poa annua* | 0 | 73,3 | 0 | 73 | 85 |
| *Trifolium repens* | 3,3 | 60 | 80 | 92 | 92,3 |

Tabelle 15: Herbizid-Kombination bestehend aus Pelargonsäure sowie Foramsulfuron und Iodosulfuron-methyl.

Tabelle 16:

| Unkraut | Pelargonsäure 30000 g Wirkstoff/ha; Herbizide Wirkung [%] | Foramsulfuron 15 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| Chenopodium album | 20 | 0 | 0 | 20 | 83,3 |
| Festuca ovina | 6,7 | 6,7 | 0 | 13 | 78,3 |
| Plantago major | 13,3 | 0 | 0 | 13 | 41,7 |
| Taraxacum officinale | 20 | 45 | 18,3 | 64 | 96 |
| Poa annua | 0 | 18,3 | 0 | 18 | 38,3 |
| Trifolium repens | 3,3 | 18,3 | 18,3 | 35 | 53,3 |

Tabelle 16: Herbizid-Kombination bestehend aus Pelargonsäure sowie Foramsulfuron und Iodosulfuron-methyl.

Tabelle 17:

| Unkraut | Pelargonsäure 30000 g Wirkstoff/ha; Herbizide Wirkung [%] | Foramsulfuron 15 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| Chenopodium album | 20 | 0 | 40 | 52 | 93,3 |
| Festuca ovina | 6,7 | 6,7 | 6,7 | 19 | 91,7 |
| Plantago major | 13,3 | 0 | 53,3 | 60 | 75 |
| Taraxacum officinale | 20 | 45 | 85 | 93 | 98,7 |
| Poa annua | 0 | 18,3 | 0 | 18 | 73,3 |
| Trifolium repens | 3,3 | 18,3 | 80 | 84 | 93,3 |

Tabelle 17: Herbizid-Kombination bestehend aus Pelargonsäure sowie Foramsulfuron und Iodosulfuron-methyl.

Tabelle 18:

| Unkraut | Pelargonsäure 30000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| Chenopodium album | 20 | 13,3 | 0 | 31 | 88,3 |
| Festuca ovina | 6,7 | 58,3 | 0 | 61 | 98,3 |

(fortgesetzt)

| Unkraut | Pelargonsäure 30000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Plantago major* | 13,3 | 33,3 | 0 | 42 | 63,3 |
| *Taraxacum officinale* | 20 | 75 | 18,3 | 84 | 98,7 |
| *Poa annua* | 0 | 73,3 | 0 | 73 | 92,3 |
| *Trifolium repens* | 3,3 | 60 | 18,3 | 68 | 75 |

Tabelle 18: Herbizid-Kombination bestehend aus Pelargonsäure sowie Foramsulfuron und Iodosulfuron-methyl.

**Patentansprüche**

1. Herbizid-Kombination enthaltend

   als Komponente (A) Pelargonsäure,
   und
   als Komponente (B) zumindest einen ALS-Inhibitor, der Flazasulfuron ist, wobei das Gewichtsverhältnis der Komponenten (A) und (B) im Bereich von 200:1 bis 12,5:1 liegt.

2. Herbizid-Kombination nach Anspruch 1, wobei neben der Komponente (A) als Komponente (B) zumindest zwei unterschiedliche ALS-Inhibitoren verwendet werden.

3. Herbizid-Kombination nach einem der vorherigen Ansprüche, enthaltend einen wirksamen Gehalt an Komponenten (A) und (B) und/oder zusätzlich eine oder mehrere weitere Komponenten aus der Gruppe agrochemischer Wirkstoffe anderer Art, im Pflanzenschutz übliche Zusatzstoffe und Formulierungshilfsmittel.

4. Verfahren zur Bekämpfung von Unkräutern, **dadurch gekennzeichnet, dass** man Herbizid-Kombinationen gemäß einem der Ansprüche 1 bis 3 auf die Unkräuter und/oder deren Lebensraum ausbringt.

5. Verfahren zu Bekämpfung von Unkräutern gemäß Anspruch 4, **dadurch gekennzeichnet, dass** man die Komponente (A) und die Komponente (B) der Herbizid-Kombination erst kurz vor Ausbringung auf die Unkräuter und/oder deren Lebensraum zusammenmischt.

6. Verwendung von Herbizid-Kombinationen gemäß einem der Ansprüche 1 bis 3 zur Bekämpfung von Unkräutern.

**Claims**

1. Herbicide combination comprising

   as component (A) pelargonic acid
   and
   as component (B) at least one ALS inhibitor which is flazasulfuron, where the weight ratio of components (A) and (B) is in the range from 200:1 to 12.5:1.

2. Herbicide combination according to Claim 1, wherein at least two different ALS inhibitors are used as component (B) alongside component (A).

3. Herbicide combination according to either of the preceding claims, comprising an effective amount of components (A) and (B) and/or additionally one or more further components from the group of active agrochemical ingredients of a different type, and formulation auxiliaries and additives customary in crop protection.

4. Method of controlling weeds, **characterized in that** herbicide combinations according to any of Claims 1 to 3 are applied to the weeds and/or their habitat.

5. Method of controlling weeds according to Claim 4, **characterized in that** component (A) and component (B) of the herbicide combination are mixed only shortly before application to the weeds and/or their habitat.

6. Use of herbicide combinations according to any of Claims 1 to 3 for controlling weeds.


**Revendications**

1. Composition herbicide contenant

   en tant que composant (A) de l'acide pélargonique, et
   en tant que composant (B) au moins un inhibiteur de l'ALS, qui est le flazasulfuron, le rapport en poids des composants (A) et (B) se situant dans la plage de 200:1 à 12,5:1.

2. Combinaison herbicide selon la revendication 1, dans laquelle, outre le composant (A), on utilise en tant que composant (B) au moins deux inhibiteurs de l'ALS différents.

3. Combinaison herbicide selon l'une des revendications précédentes, contenant une teneur active en les composants (A) et (B) et/ou en outre un ou plusieurs composants supplémentaires du groupe des matières actives agrochimiques d'un autre type, des additifs usuels en protection des plantes et des auxiliaires de formulation.

4. Procédé de lutte contre les mauvaises herbes, **caractérisé en ce qu'**on applique des combinaisons herbicides selon l'une des revendications 1 à 3 sur les mauvaises herbes et/ou leur habitat.

5. Procédé de lutte contre les mauvaises herbes selon la revendication 4, **caractérisé en ce qu'**on ne mélange le composant (A) et le composant (B) de la combinaison herbicide que peu de temps avant application sur les mauvaises herbes et/ou leur habitat.

6. Utilisation de combinaison herbicide selon l'une des revendications 1 à 3 pour lutter contre les mauvaises herbes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0494386 A
- US 6503869 B
- WO 0105472 A

**In der Beschreibung aufgeführte Nicht-Patentliteratur**

- The Pesticide Manual. British Crop Protection Council, 2011
- **COLBY, S.R.** Calculating synergistic and antagonistic responses of herbicide combinations. *Weeds,* 1967, vol. 15, 20-22